# EUROPÄISCHE PATENTANMELDUNG

(11) **EP 3 064 800 A1**
(43) Veröffentlichungstag der Anmeldung: **07.09.2016**
(21) Anmeldenummer: 16154594.2
(22) Anmeldetag: 08.02.2016
(51) Int. Cl.: F16F 15/131, F16F 15/14

(54) **TORSIONSDÄMPFER UND DREHMOMENTÜBERTRAGUNGSEINRICHTUNG**

(30) Priorität: 05.03.2015 DE 102015203942
(71) Anmelder: Schaeffler Technologies AG & Co. KG, 91074 Herzogenaurach (DE)
(72) Erfinder: Maienschein, Stephan, 76534 Baden-Baden (DE)

(57) **Zusammenfassung**

Die Erfindung betrifft einen Torsionsdämpfer und eine Drehmomentübertragungseinrichtung (10) mit solch einem Torsionsdämpfer, wobei die Drehmomentübertragungseinrichtung (10) der drehbar um eine Drehachse (15) lagerbar ist und eine Eingangsseite (20), wenigstens eine Federeinrichtung (75, 80) und eine Tilgermasse (85) umfasst, wobei die Eingangsseite (20) mit einer ersten Seite der Federeinrichtung (75, 80) und die Tilgermasse (85) mit einer zweiten Seite der Federeinrichtung (75, 80) gekoppelt ist, wobei die Tilgermasse (85) ein Zusatzmassenteil (140) mit einem ersten Abschnitt (145) und wenigstens einem zweiten Abschnitt (150, 155) umfasst, wobei der erste Abschnitt (145) und der zweite Abschnitt (150, 155) gefaltet und materialeinheitlich ausgebildet sind.

## Beschreibung

Die Erfindung betrifft einen Torsionsdämpfer gemäß Patentanspruch 1 und eine Drehmomentübertragungseinrichtung gemäß Patentanspruch 9.

Es ist eine Drehmomentübertragungseinrichtung mit einer Eingangsseite und einer Ausgangsseite bekannt, die einen Torsionsdämpfer aufweist. Die Eingangsseite ist mit einem Antriebsmotor eines Antriebsstrangs eines Kraftfahrzeugs verbindbar. Die Ausgangsseite ist mit einer Übersetzungseinrichtung des Antriebsstrangs verbindbar. Die Drehmomentübertragungseinrichtung weist neben dem Torsionsdämpfer zwei Drehmomentübertragungspfade auf, wobei in einem ersten Drehmomentübertragungspfad ein hydrodynamischer Wandler und in einem zweiten Drehmomentübertragungspfad eine Überbrückungskupplung angeordnet ist. Die Überbrückungskupplung ist schaltbar, sodass der zweite Drehmomentübertragungspfad parallel zum ersten Drehmomentübertragungspfad geschalten werden kann. Der Torsionsdämpfer ist im zweiten Drehmomentübertragungspfad angeordnet. Ist die Überbrückungskupplung geschlossen, wird das Drehmoment von der Eingangsseite über die Überbrückungskupplung und dem Torsionsdämpfer zur Ausgangsseite übertragen. Der Torsionsdämpfer weist üblicherweise eine Tilgermasse auf, die üblicherweise gegossen wird.

Es ist Aufgabe der Erfindung, einen verbesserten Torsionsdämpfer und eine verbesserte Drehmomentübertragungseinrichtung bereitzustellen.

Diese Aufgabe wird mittels eines Torsionsdämpfers gemäß Patentanspruch 1 gelöst. Vorteilhafte Ausführungsformen sind in den abhängigen Ansprüchen angegeben.

Erfindungsgemäß wurde erkannt, dass ein verbesserter Torsionsdämpfer dadurch bereitgestellt werden kann, dass der Torsionsdämpfer drehbar um eine Drehachse lagerbar ist. Der Torsionsdämpfer weist eine Eingangsseite, wenigstens eine Federeinrichtung und eine Tilgermasse auf. Die Eingangsseite ist mit einer ersten Seite der Federeinrichtung und die Tilgermasse mit einer zweiten Seite der Federeinrichtung gekoppelt. Die Tilgermasse umfasst ein Zusatzmassenteil mit einem ersten Abschnitt und wenigstens einem zweiten Abschnitt. Der erste Abschnitt und der zweite Abschnitt sind gefaltet und materialeinheitlich ausgebildet.

Dadurch kann das Zusatzmassenteil kostengünstig in einem Stanzbiegeprozess aus einem einstückig ausgebildeten Rohling, insbesondere einem plattenförmig ausgebildeten Rohling, gefertigt werden. Dadurch kann der Torsionsdämpfer besonders kostengünstig ausgebildet werden.

In einer weiteren Ausführungsform ist der erste Abschnitt und der zweite Abschnitt zumindest abschnittsweise parallel zueinander ausgerichtet. Dadurch kann das Zusatzmassenteil besonders hohe Masse zu einem zur Verfügung stehenden Bauraum aufweisen.

In einer weiteren Ausführungsform ist der erste Abschnitt und der zweite Abschnitt parallel zur Drehachse und/oder senkrecht zur Drehachse ausgerichtet.

In einer weiteren Ausführungsform ist der erste Abschnitt und/oder der zweite Abschnitt geradlinig ausgebildet.

In einer weiteren Ausführungsform weist die Tilgermasse ein Anbindungsmassenteil auf. Das Anbindungsmassenteil ist mit der zweiten Seite der Federeinrichtung verbunden. Das Zusatzmassenteil ist mit dem Anbindungsmassenteil drehmomentschlüssig mittels einer Verbindung verbunden. Die Verbindung ist vorzugsweise stoffschlüssig und/oder formschlüssig ausgebildet.

In einer weiteren Ausführungsform weist das Zusatzmassenteil einen dritten Abschnitt auf. Der dritte Abschnitt ist schräg oder senkrecht zum ersten und/oder zweiten Abschnitt angeordnet.

In einer weiteren Ausführungsform weist das Zusatzmassenteil einen Bogenabschnitt auf. Der Bogenabschnitt verbindet den ersten Abschnitt mit dem zweiten Abschnitt. Vorzugsweise schließt der Bogenabschnitt einen Winkel im Wesentlichen von 180 Grad ein.

In einer weiteren Ausführungsform ist das Zusatzmassenteil radial außenseitig der Federeinrichtung angeordnet.

Die Aufgabe wird aber auch durch eine Drehmomentübertragungseinrichtung gemäß Patentanspruch 9 gelöst.

Erfindungsgemäß wurde erkannt, dass eine verbesserte Drehmomentübertragungseinrichtung dadurch bereitgestellt werden kann, dass die Drehmomentübertragungseinrichtung einen Torsionsdämpfer und ein Turbinenrad eines hydrodynamischen Wandlers aufweist. Der Torsionsdämpfer ist wie oben beschrieben ausgebildet. Der zweite Abschnitt ist radial außenseitig mit dem Turbinenrad mittels einer weiteren Verbindung, insbesondere einer stoffschlüssigen Verbindung, drehmomentschlüssig verbunden. Dadurch kann die Masse des Zusatzmassenteils um die Masse des Turbinenrads erhöht werden. Dadurch kann auf einfache Weise eine Erregerfrequenz des Torsionsdämpfers verändert werden.

Nachfolgend wird die Erfindung anhand von Figuren näher erläutert. Dabei zeigen:
- Figur 1: eine schematische Darstellung nach Art eines Schaltplans einer Drehmomentübertragungseinrichtung gemäß einer ersten Ausführungsform;
- Figur 2: einen Halblängsschnitt durch eine in Figur 1 gezeigte Drehmomentübertragungseinrichtung in einer konstruktiven Ausgestaltung;
- Figur 3: einen Ausschnitt eines Längsschnitts in einer Weiterbildung der in Figur 2 gezeigten Tilgermasse;
- Figur 4: einen Ausschnitt eines Längsschnitts einer Variante der in Figur 3 gezeigten Tilgermasse;
- Figur 5: einen Ausschnitt eines Längsschnitts einer weiteren Variante der in Figuren 3 und 4 gezeigten Tilgermasse; und
- Figur 6: einen Halblängsschnitt durch eine Drehmomentübertragungseinrichtung gemäß einer zweiten Ausführungsform.

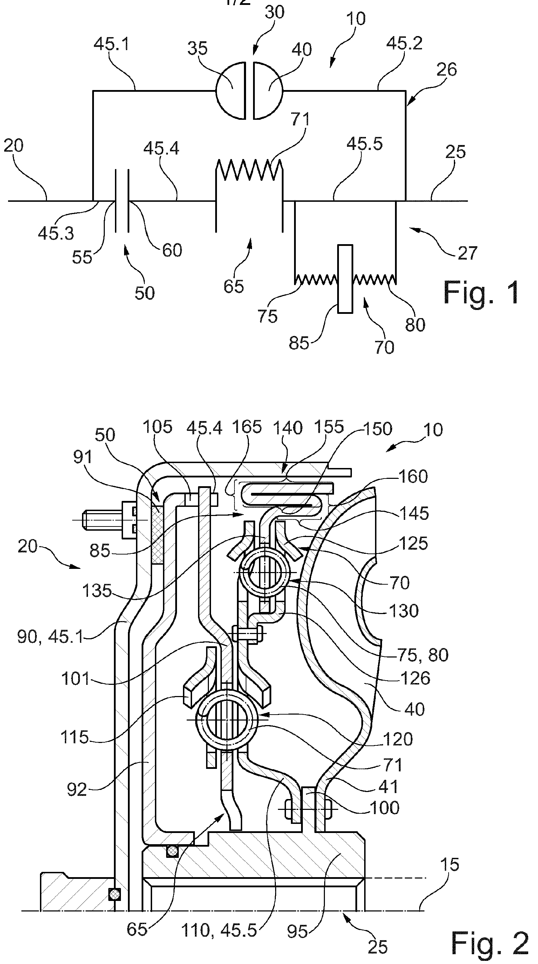

Figur 1 zeigt eine schematische Darstellung nach Art eines Schaltplans einer Drehmomentübertragungseinrichtung 10 gemäß einer ersten Ausführungsform. Dabei sind in Figur 1 Komponenten der Drehmomentübertragungseinrichtung 10 symbolisch mit unterschiedlich großen Kästen dargestellt. Dabei soll beispielhaft eine Größe des Kastens jeweils eine Massenträgheit der Komponente darstellen. Linien stellen in Figur 1 eine Drehmomentübertragung 45 zwischen Komponenten dar.

Die Drehmomentübertragungseinrichtung 10 umfasst eine Eingangsseite 20 und eine Ausgangsseite 25. Zwischen der Eingangsseite 20 und der Ausgangsseite 25 ist ein erster Drehmomentübertragungspfad 26 und ein zweiter Drehmomentübertragungspfad 27 vorgesehen.

Die Eingangsseite 20 ist mit einem Antriebsmotor eines Antriebsstrangs drehmomentschlüssig verbindbar. Die Ausgangsseite 25 ist mit einer Übersetzungseinrichtung des Antriebsstrangs verbindbar. Der Antriebsmotor kann als Hubkolbenmotor ausgebildet sein. Dieser stellt bauartbedingt ein mit Drehschwingungen beladenes Drehmoment der Eingangsseite 20 der Drehmomentübertragungseinrichtung 10 bereit. Das Drehmoment soll von der Eingangsseite 20 an die Ausgangsseite 25 mittels der Drehmomentübertragungseinrichtung 10 an die Übersetzungseinrichtung übertragen werden.

Die Drehmomentübertragungseinrichtung 10 weist im ersten Drehmomentübertragungspfad 26 einen hydrodynamischen Wandler 30 auf. Der Wandler 30 weist ein Pumpenrad 35 und ein Turbinenrad 40 auf. Das Pumpenrad 35 ist über eine erste Drehmomentübertragung 45.1 mit der Eingangsseite 20 drehmomentschlüssig verbunden. Das Turbinenrad 40 ist über eine zweite Drehmomentübertragung 45.2 drehmomentschlüssig mit der Ausgangsseite 25 verbunden.

Im zweiten Drehmomentübertragungspfad 27 weist die Drehmomentübertragungseinrichtung 10 eine Überbrückungskupplung 50 auf. Die Überbrückungskupplung 50 umfasst eine Kupplungseingangsseite 55 und eine Kupplungsausgangsseite 60 auf. Die Kupplungseingangsseite 55 ist über eine dritte Drehmomentübertragung 45.3 mit der Eingangsseite 20 der Drehmomentübertragungseinrichtung 10 verbunden.

Ferner umfasst die Drehmomentübertragungseinrichtung 10 einen ersten Torsionsdämpfer 65 und einen zweiten Torsionsdämpfer 70. Der erste Torsionsdämpfer 65 umfasst eine erste Federeinrichtung 71, die beispielsweise eine Bogenfeder oder eine Druckfeder umfassen kann. Der erste Torsionsdämpfer 65 ist eingangsseitig mittels einer vierten Drehmomentübertragung 45.4 mit der Kupplungsausgangsseite 60 verbunden. Ausgangsseitig ist der erste Torsionsdämpfer 65 mittels einer fünften Drehmomentübertragung 45.5 mit der Ausgangsseite 25 verbunden. Der zweite Torsionsdämpfer 70 ist parallel zur fünften Drehmomentübertragung 45.5 geschalten und umfasst eine zweite Federeinrichtung 75 und eine dritte Federeinrichtung 80. Zwischen der zweiten Federeinrichtung 75 und der dritten Federeinrichtung 80 ist eine Tilgermasse 85 angeordnet. Durch die Anordnung der Tilgermasse 85 zwischen der zweiten Federeinrichtung 75 und der dritten Federeinrichtung 80 wirkt der zweite Torsionsdämpfer 70 als Festfrequenzdämpfer mit einer vordefiniert festgelegten Eigenfrequenz. Die zweite Federeinrichtung 75 und/oder die dritte Federeinrichtung 80 kann dabei als Bogenfeder oder Druckfeder ausgebildet sein.

Ist die Überbrückungskupplung 50 geöffnet, wird das Drehmoment zwischen der Eingangsseite 20 und der Ausgangsseite 25 über den ersten Drehmomentübertragungspfad 26 übertragen.

Ist die Überbrückungskupplung 50 geschlossen, wird das Drehmoment vom Antriebsmotor von der Eingangsseite 20 über die dritte Drehmomentübertragung 45.3 an die Kupplungseingangsseite 55 übertragen. Die Überbrückungskupplung 50 leitet in geschlossenem Zustand das Drehmoment von der dritten Drehmomentübertragung 45.3 an die vierte Drehmomentübertragung 45.4 weiter. Die erste Federeinrichtung 71 wird gestaucht und überträgt das Drehmoment von der vierten Drehmomentübertragung 45.4 an die fünfte Drehmomentübertragung 45.5 weiter. Dabei tilgt der erste Torsionsdämpfer 65 zumindest einen ersten Anteil der im Drehmoment vorhandenen Drehschwingungen.

Abhängig von der in der fünften Drehmomentübertragung 45.5 vorhandenen Frequenz der noch in der fünften Drehmomentübertragung 45.5 vorhandenen Drehschwingungen des Drehmoments wird der zweite Torsionsdämpfer 70 zum Schwingen angeregt. In angeregtem Zustand tilgt der zweite Torsionsdämpfer einen zweiten Anteil der noch in der fünften Drehmomentübertragung 45.5 vorhandenen Drehschwingungen des Drehmoments, sodass an der Ausgangsseite 25 ein im Wesentlichen drehschwinungsarmes Drehmoment bereitgestellt werden kann.

Figur 2 zeigt einen Halblängsschnitt durch eine in Figur 1 gezeigte Drehmomentübertragungseinrichtung 10 in einer konstruktiven Ausgestaltung.

Die Drehmomentübertragungseinrichtung 10 ist drehbar um eine Drehachse 15 gelagert und umfasst ein Gehäuseteil 90. Das Gehäuseteil 90 ist mit der Eingangsseite 20 verbunden und bildet die erste und dritte Drehmomentübertragung 45.1, 45.3 aus. An dem Gehäuseteil 90 ist ein Reibbelag 91 der Überbrückungskupplung 50 angeordnet. Ferner umfasst axial an den Reibbelag 91 angrenzend die Überbrückungskupplung 50 ein Kupplungsausgangsteil 92. Das Kupplungsausgangsteil 92 bildet die Kupplungsausgangsseite 60 aus und wird in geschlossenem Zustand mittels einer nicht dargestellten Betätigungseinrichtung gegen den Reibbelag 91 gedrückt.

Das Kupplungsausgangsteil 92 ist scheibenförmig ausgebildet und erstreckt sich im Wesentlichen in radialer Richtung. Radial außenseitig umfasst das Kupplungsausgangsteil einen Axialabschnitt 105, der im Wesentlichen parallel zur Drehachse 15 ausgerichtet ist.

Die Ausgangsseite 25 weist eine Nabe 95 auf. Die Nabe 95 stellt die drehmomentschlüssige Verbindung zu der Übersetzungseinrichtung bereit. Das Kupplungsausgangsteil 92 ist axial verschiebbar und relativ gegenüber der Nabe 95 auf der Nabe 95 gelagert.

Die Nabe 95 umfasst einen Nabenflansch 100. Am Nabenflansch 100 ist das Turbinenrad 40 über einen radial innenseitig am Turbinenrad 40 angeordneten Turbinenflansch 41 drehmomentschlüssig mit der Nabe 95 verbunden.

Der erste Torsionsdämpfer 65 weist ein erstes Scheibenteil 101 auf. Das erste Scheibenteil 101 erstreckt sich im Wesentlichen in radialer Richtung. Radial außenseitig ist das erste Scheibenteil 101 mittels des Axialabschnitts 105 drehmomentschlüssig mit der Überbrückungskupplung 50 verbunden. Der Axialabschnitt 105 und das erste Scheibenteil 101 bilden die in Figur 1 erläuterte vierte Drehmomentübertragung 45.4 aus. Radial innenseitig ist das erste Scheibenteil 101 drehbar gegenüber der Nabe 95 auf der Nabe 95 gelagert.

Ferner weist der erste Torsionsdämpfer 65 wenigstens ein zweites Scheibenteil 110 und ein drittes Scheibenteil 115 auf. Das zweite Scheibenteil 110 und das dritte Scheibenteil 115 sind beidseitig axial des ersten Scheibenteils 101 etwa auf Höhe der ersten Federeinrichtung 71 angeordnet. Das zweite Scheibenteil 110 und das dritte Scheibenteil 115 bilden eine erste Aufnahme 120 zur Befestigung der ersten Federeinrichtung 71 aus. Dabei sind das zweite und das dritte Scheibenteil 110, 115 miteinander verbunden. Das erste Scheibenteil 101 ist in Umfangsrichtung gegenüber dem zweiten und dritten Scheibenteil 110, 115 verdrehbar. Radial innenseitig ist das zweite Scheibenteil 110 auf einer zum Turbinenrad 40 gegenüberliegenden Seite des Nabenflanschs 100 mit dem Nabenflansch 100 drehmomentschlüssig verbunden. Das zweite Scheibenteil 110 bildet dabei die fünfte Drehmomentübertragung 45.5 aus. Das erste Scheibenteil 101 ist dabei mit einer ersten Seite mit der ersten Federeinrichtung 71 verbunden. Das zweite Scheibenteil 110 und das dritte Scheibenteil 115 sind mit einer zweiten Seite der ersten Federeinrichtung 71 gekoppelt.

Radial außenseitig des ersten Torsionsdämpfers 65 ist der zweite Torsionsdämpfer 70 axial zwischen dem ersten Scheibenteil 101 und dem Turbinenrad 40 angeordnet.

Der zweite Torsionsdämpfer 70 umfasst ein viertes Scheibenteil 125. Das vierte Scheibenteil 125 ist mit dem zweiten Scheibenteil 110 radial innenseitig verbunden. Das zweite Scheibenteil 110 erstreckt sich radial nach außen hin und bildet zusammen mit dem vierten Scheibenteil 125 eine zweite Aufnahme 130 aus. In der zweiten Aufnahme 130 sind die zweite Federeinrichtung 75 und die dritte Federeinrichtung 80 in Umfangsrichtung gegenüberliegend angeordnet. Die zweite und dritte Federeinrichtung 75, 80 sind in Umfangsrichtung beispielsweise auf einer Kreisbahn oder tangential zu einer Kreisbahn um die Drehachse 15 verlaufend ausgerichtet. Dabei sind das zweite Scheibenteil 110 und das vierte Scheibenteil 125 jeweils mit einer ersten Seite der zweiten Federeinrichtung 75 und der dritten Federeinrichtung 80 gekoppelt. Die erste Seite der zweiten und dritten Federeinrichtungen 75, 80 sind auf jeweils zueinander abgewandten Seiten der zweiten und dritten Federeinrichtung 75, 80 in Umfangsrichtung angeordnet.

Die Tilgermasse 85 umfasst ein Anbindungsmassenteil 135 und ein Zusatzmassenteil 140. Das Zusatzmassenteil 140 ist radial außenseitig der der zweiten und dritten Federeinrichtungen 75, 80 angeordnet. Das Anbindungsmassenteil 135 ist axial zwischen dem zweiten Scheibenteil 110 und dem vierten Scheibenteil 125 und radial innenseitig des Zusatzmassenteils 140 angeordnet. Das Anbindungsmassenteil 135 durchgreift dabei in radialer Richtung die zweite Aufnahme 130.

In Umfangsrichtung zwischen der zweiten Federeinrichtung 75 und der dritten Federeinrichtung 80 ist das Anbindungsmassenteil 135 angeordnet. Das Anbindungsmassenteil 135 ist jeweils mit einer zweiten Seite der zweiten und dritten Federeinrichtung 75, 80 gekoppelt. Die zweite Seite der zweiten und dritten Federeinrichtungen 75, 80 sind auf jeweils zueinander zugewandten Seiten der Federeinrichtungen 75, 80 in Umfangsrichtung angeordnet. Somit verspannen die zweite Federeinrichtung 75 und die dritte Federeinrichtung 80 die Tilgermasse 85 in Umfangsrichtung und legen eine Position in Umfangsrichtung der Tilgermasse 85 fest. In axialer Richtung ist die Tilgermasse zwischen dem zweiten und vierten Scheibenteil 110, 125 drehbar auf einem Absatz 126 des vierten Scheibenteils 125 gelagert.

Das Zusatzmassenteil 140 umfasst einen ersten Abschnitt 145, einen zweiten Abschnitt 150 und einen dritten Abschnitt 155. Der erste Abschnitt 145, der zweite Abschnitt 150 und der dritte Abschnitt 155 sind gefaltet und materialeinheitlich ausgebildet. Der erste Abschnitt 145, der zweite Abschnitt 150 und der dritte Abschnitt 155 verlaufen dabei geradlinig. Zwischen dem ersten Abschnitt 145 und dem zweiten Abschnitt 150 ist ein erster Bogenabschnitt 160 und zwischen dem zweiten Abschnitt 150 und dem dritten Abschnitt 155 ist ein zweiter Bogenabschnitt 165 vorgesehen. Der erste Bogenabschnitt 160 und der zweite Bogenabschnitt 165 schließen vorzugsweise einen Winkel von 180 Grad ein, sodass der erste Abschnitt 145 parallel zu dem zweiten Abschnitt 150 und der zweite Abschnitt 150 parallel zu dem dritten Abschnitt 155 verläuft. Dabei liegt radial außenseitig der zweite Abschnitt 150 an dem ersten Abschnitt 145 an. Der dritte Abschnitt 155 liegt radial außenseitig an dem zweiten Abschnitt 150 an. Die Bogenabschnitte 160, 165 sind in axialer Richtung auf gegenüberliegenden Seiten des Zusatzmassenteils 104 angeordnet. Dadurch kann das Zusatzmassenteil 140 kostengünstig und einfach in einem Stanzbiegeprozess aus einen planen Rohling gefertigt werden.

In der Ausführungsform sind das Anbindungsmassenteil 135 und das Zusatzmassenteil 140 einstückig und materialeinheitlich ausgebildet. Selbstverständlich ist auch denkbar, dass das Zusatzmassenteil 140 mittels einer form- oder stoffschlüssigen Verbindung mit dem Anbindungsmassenteil 135 verbunden ist.

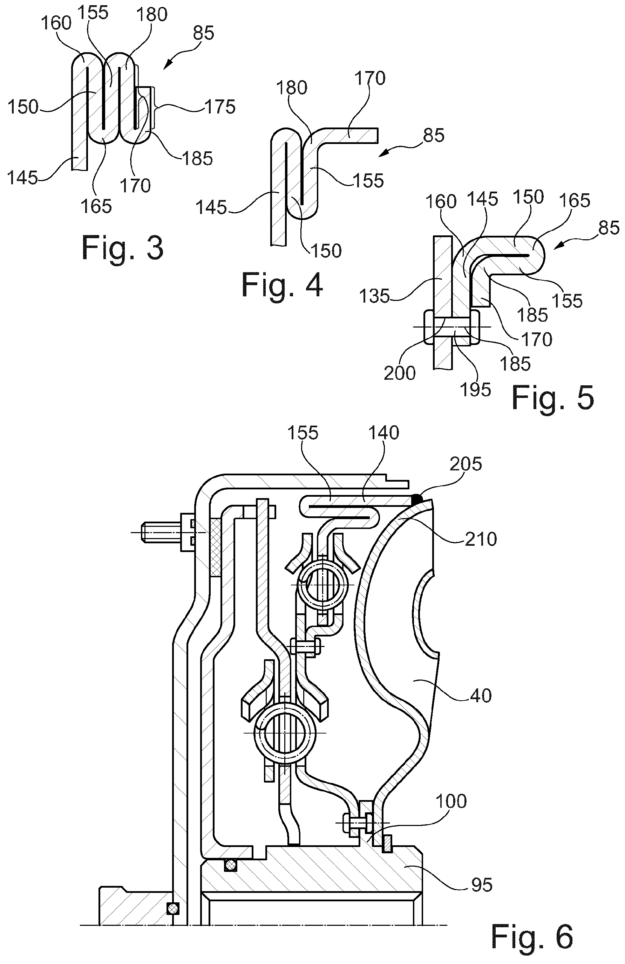

Figur 3 zeigt einen Ausschnitt eines Längsschnitts in einer Weiterbildung der in Figur 2 gezeigten Tilgermasse 85. Die Tilgermasse 85 ist ähnlich zu der in Figur 2 gezeigten Tilgermasse 85 ausgebildet. Abweichend dazu weist das Zusatzmassenteil 140 einen vierten Abschnitt 170 und einen fünften Abschnitt 175 zusätzlich zu den bereits in Figur 2 gezeigten Abschnitten 145, 150, 155 auf. Der vierte Abschnitt 170 und der fünfte Abschnitt 175 verlaufen geradlinig. Dabei ist der fünfte Abschnitt 175 in radialer Richtung kürzer ausgebildet als der vierte Abschnitt 170. Der vierte Abschnitt 170 ist mittels eines dritten Bogenabschnitts 180 mit dem dritten Abschnitt 155 verbunden. Der fünfte Abschnitt 175 ist mittels eines vierten Bogenabschnitts 185 mit dem vierten Abschnitt 170 verbunden. Der dritte und vierte Bogenabschnitt 180, 185 schließen in der Ausführungsform jeweils einen Winkel von 180 Grad ein. Die Abschnitte 145, 150 155, 170, 175 sind dabei senkrecht zur Drehachse 15 ausgerichtet. Die Bogenabschnitte 160, 165, 180, 185 sind abwechselnd radial innen und radial außen angeordnet. Dabei sind die Abschnitte 145, 150, 155, 170, 175 stapelartig gefaltet von dem Anbindungsmassenteil 135 in Richtung des Turbinenrads 40 hin verlaufend angeordnet.

Figur 4 zeigt einen Ausschnitt eines Längsschnitts einer Variante der in Figur 3 gezeigten Tilgermasse 85. Abweichend dazu wird auf den in Figur 4 gezeigten fünften Abschnitt 175 verzichtet. Ferner sind der erste Abschnitt 145, der zweite Abschnitt 150 und der dritte Abschnitt 155 senkrecht zur Drehachse 15 ausgerichtet, während hingegen der vierte Abschnitt 170 parallel zur Drehachse 15 ausgerichtet ist, sodass der dritte Abschnitt 155 mit dem vierten Abschnitt 170 eine L-artige Form des Zusatzmassenteils 140 ausbildet. Der dritte Bogenabschnitt 180 schließt dabei einen Winkel von 90 Grad ein. Selbstverständlich ist auch denkbar, dass der vierte Abschnitt 170 schräg zu dem ersten bis dritten Abschnitt 145, 150, 155 angeordnet ist und der dritte Bogenabschnitt 180 einen anderen Winkel als 90 Grad einschließt.

Figur 5 zeigt einen Ausschnitt eines Längsschnitts durch eine weitere Variante der in Figur 3 gezeigten Tilgermasse 85. Die Tilgermasse 85 ist ähnlich der in den Figuren 2 bis 4 gezeigten Tilgermasse 85 ausgebildet. Abweichend dazu ist die Tilgermasse 85 zweiteilig ausgebildet. Dabei ist das Zusatzmassenteil 140 mittels einer in der Ausführungsform beispielhaften formschlüssigen Verbindung 190 mit dem Anbindungsmassenteil 135 drehmomentschlüssig verbunden. Die Verbindung 190 ist beispielhaft als Nietverbindung ausgebildet. Selbstverständlich ist zusätzlich oder alternativ auch denkbar, dass die Verbindung 190 stoffschlüssig ausgebildet ist. Dabei erstreckt sich ein Nietbolzen 195 der Verbindung 190 durch eine Aussparung 200, die sowohl im Anbindungsmassenteil 135 als auch im Zusatzmassenteil 140 angeordnet ist. Der Nietbolzen 195 ist dabei parallel zur Drehachse 15 ausgerichtet.

Das Zusatzmassenteil 140 weist die bereits aus Figur 4 bekannten vier Abschnitte 145, 150, 155, 170 auf. Der erste Abschnitt 145 ist axial angrenzend an das Anbindungsmasseteil 135 auf einer zur Überbrückungskupplung 50 abgewandten Seite angeordnet. Dabei ist die Aussparung 200 im ersten Abschnitt 145 angeordnet. Radial außenseitig zum ersten Abschnitt 145 ist der zweite Abschnitt 150 angeordnet. Der zweite Abschnitt 150 ist radial außenseitig zu dem dritten Abschnitt 155 und vierten Abschnitt 170 angeordnet. Der dritte Abschnitt 155 liegt dabei radial innenseitig an dem zweiten Abschnitt 150 an. Der zweite Abschnitt 150 erstreckt sich dabei in axialer Richtung parallel zur Drehachse 15, während hingegen der erste Abschnitt 145 senkrecht zur Drehachse 15 ausgerichtet ist. Der vierte Abschnitt 170 erstreckt sich radial vom dritten Abschnitt 155 nach radial innen. Er endet jedoch radial außenseitig der Verbindung 190. Dabei ist der vierte Abschnitt 170 auf einer zum Turbinenrad 40 zugewandten Seite des ersten Abschnitts 145 angeordnet und liegt an dem ersten Abschnitt 145 an.

Der erste Bogenabschnitt 160, der dritte Bogenabschnitt 180 und der vierte Bogenabschnitt 185 schließen jeweils beispielhaft einen Winkel von 90 Grad ein. Der zweite Bogenabschnitt 165 schließt einen Winkel von 180 Grad ein. Dadurch ergibt sich eine mäanderförmige Ausgestaltung des gefalteten Zusatzmassenteils 140.

Figur 6 zeigt einen Halblängsschnitt durch eine Drehmomentübertragungseinrichtung 10 gemäß einer zweiten Ausführungsform. Die Drehmomentübertragungseinrichtung10 ist ähnlich zu der in Figur 2 gezeigten Drehmomentübertragungseinrichtung 10 ausgebildet. Abweichend dazu ist das Turbinenrad 40 radial innenseitig nicht, wie in Figur 2 gezeigt, mit dem Nabenflansch 100 drehmomentschlüssig verbunden sondern relativ verdrehbar gegenüber der Nabe 95 auf der Nabe 95 gelagert. Der Nabenflansch 100 dient dazu eine axiale Position des Turbinenrads 40 festzulegen. Das Zusatzmassenteil 140 ist über eine weitere Verbindung 205 radial außenseitig mit dem Turbinenrad 40 verbunden. Dabei verbindet die weitere Verbindung 205 den dritten Abschnitt 155 mit einer Außenkontur 210 des Turbinenrads 40 drehmomentschlüssig. Dadurch kann auf einfache Weise eine Masse des Zusatzmassenteils 140 gegenüber Figur 2 erhöht werden, sodass auf einfache Weise die Eigenfrequenz des zweiten Torsionsdämpfers 70 adaptierbar ist.

Die in den Figuren 1 bis 6 beschriebene Ausgestaltung der Tilgermasse 85 hat den Vorteil, dass auf einfache Weise die Tilgermasse 85 herstellbar ist. Mittels des Faltens des Zusatzmassenteils 140 in verschiedene Abschnitte kann die Masse des Zusatzmassenteils 140 einfach adaptiert werden und kostengünstig in einem Stanzbiegeprozess hergestellt werden. Dadurch kann die Drehmomentübertragungseinrichtung 10 insgesamt besonders kostengünstig hergestellt werden.

Es wird darauf hingewiesen, dass die in den Figuren 1 bis 6 gezeigten Merkmale der Drehmomentübertragungseinrichtung 10 selbstverständlich kombiniert werden können. So ist auch denkbar, dass beispielsweise mittels des in Figur 4 gezeigten Zusatzmassenteils 140 der vierte Abschnitt 170 mit der weiteren Verbindung 205 mit dem Turbinenrad 40 drehmomentschlüssig verbunden wird.

Auch ist denkbar, dass bei der in Figur 1 gezeigten Ausgestaltung beispielsweise der erste Bogenabschnitt 160 mittels der weiteren Verbindung 205 mit dem Turbinenrad 40 verbunden wird.

### Bezugszeichenliste

- 10: Drehmomentübertragungseinrichtung
- 15: Drehachse
- 20: Eingangsseite
- 25: Ausgangsseite
- 26: erster Drehmomentübertragungspfad
- 27: zweiter Drehmomentübertragungspfad
- 30: hydrodynamischer Wandler
- 35: Pumpenrad
- 40: Turbinenrad
- 41: Turbinenflansch
- 45.1: erste Drehmomentübertragung
- 45.2: zweite Drehmomentübertragung
- 45.3: dritte Drehmomentübertragung
- 45.4: vierte Drehmomentübertragung
- 45.5: fünfte Drehmomentübertragung
- 50: Überbrückungskupplung
- 55: Kupplungseingangsseite
- 60: Kupplungsausgangsseite
- 65: erster Torsionsdämpfer
- 70: zweiter Torsionsdämpfer
- 71: erste Federeinrichtung
- 75: zweite Federeinrichtung
- 80: dritte Federeinrichtung
- 85: Tilgermasse
- 90: Gehäuseteil
- 91: Reibbelag
- 92: Kupplungsteil
- 95: Nabe
- 100: Nabenflansch
- 101: erstes Scheibenteil
- 105: Axialabschnitt
- 110: zweites Scheibenteil
- 115: drittes Scheibenteil
- 120: erste Aufnahme
- 125: viertes Scheibenteil
- 126: Absatz
- 130: zweite Aufnahme
- 135: Anbindungsmassenteil
- 140: Zusatzmassenteil
- 145: erster Abschnitt
- 150: zweiter Abschnitt
- 155: dritter Abschnitt
- 160: erster Bogenabschnitt
- 165: zweiter Bogenabschnitt
- 170: vierter Abschnitt
- 175: fünfter Abschnitt
- 180: dritter Bogenabschnitt
- 185: vierter Bogenabschnitt
- 190: Verbindung
- 195: Nietbolzen
- 200: Aussparung
- 205: weitere Verbindung
- 210: Außenkontur

## Patentansprüche

1. Torsionsdämpfer (70), der drehbar um eine Drehachse (15) lagerbar ist, aufweisend eine Eingangsseite (20), wenigstens eine Federeinrichtung (75, 80) und eine Tilgermasse (85), wobei die Eingangsseite (20) mit einer ersten Seite der Federeinrichtung (75, 80) und die Tilgermasse (85) mit einer zweiten Seite der Federeinrichtung (75, 80) gekoppelt ist, **dadurch gekennzeichnet, dass** die Tilgermasse (85) ein Zusatzmassenteil (140) mit einem ersten Abschnitt (145) und wenigstens einem zweiten Abschnitt (150, 155, 170, 175) umfasst, wobei der erste Abschnitt (145) und der zweite Abschnitt (150, 155, 170, 175) gefaltet und materialeinheitlich ausgebildet sind.

2. Torsionsdämpfer (70) nach Anspruch 1, wobei der erste Abschnitt (145) und der zweite Abschnitt (150, 155, 170, 175) zumindest abschnittsweise parallel zueinander ausgerichtet sind.

3. Torsionsdämpfer (70) nach Anspruch 1 oder 2, wobei der erste Abschnitt (145) und der zweite Abschnitt (150, 155, 170, 175) parallel zur Drehachse (15) und/oder senkrecht zur Drehachse (15) ausgerichtet sind.

4. Torsionsdämpfer (70) nach einem der Ansprüche 1 bis 3, wobei der erste Abschnitt (145) und/oder der zweite Abschnitt (150, 155, 170, 175) geradlinig ausgebildet ist.

5. Torsionsdämpfer (70) nach einem der Ansprüche 1 bis 4, wobei die Tilgermasse (85) ein Anbindungsmassenteil (135) umfasst, wobei das Anbindungsmassenteil (135) mit der zweiten Seite der Federeinrichtung (75, 80) verbunden ist, wobei das Zusatzmassenteil (140) mit dem Anbindungsmassenteil (135) drehmomentschlüssig mittels einer Verbindung (190) verbunden ist, wobei die Verbindung (190) vorzugsweise stoff- und/oder formschlüssig ausgebildet ist.

6. Torsionsdämpfer (70) nach einem der Ansprüche 1 bis 5, wobei das Zusatzmassenteil (140) einen dritten Abschnitt (155, 170, 175) umfasst, wobei der dritte Abschnitt (155, 170, 175) schräg oder senkrecht zum ersten und/oder zweiten Abschnitt (145, 150) angeordnet ist.

7. Torsionsdämpfer (70) nach einem der Ansprüche 1 bis 6, wobei das Zusatzmassenteil (140) einen Bogenabschnitt (160, 165, 180, 185) umfasst, wobei der Bogenabschnitt (160, 165, 180, 185) den ersten Abschnitt (145) mit dem zweiten Abschnitt (150, 155, 170, 175) verbindet, wobei vorzugsweise der Bogenabschnitt (160, 165, 180, 185) einen Winkel im Wesentlichen von 180 Grad einschließt.

8. Torsionsdämpfer (70) nach einem der Ansprüche 1 bis 7, wobei das Zusatzmassenteil (140) radial außenseitig der Federeinrichtung (75, 80) angeordnet ist.

9. Drehmomentübertragungseinrichtung (10) mit einem Torsionsdämpfer (70) nach einem der vorherigen Ansprüche und einem Turbinenrad (40) eines hydrodynamischen Wandlers (30), wobei der zweite Abschnitt (150, 155, 170, 175) radial außenseitig mit dem Turbinenrad (40) mittels einer weiteren Verbindung (205), insbesondere einer stoffschlüssigen Verbindung (205), drehmomentschlüssig verbunden ist.
